# EUROPÄISCHE PATENTSCHRIFT

(11) **EP 2 761 165 B1**
(45) Veröffentlichungstag und Bekanntmachung des Hinweises auf die Patenterteilung: **06.01.2016**
(21) Anmeldenummer: 12761726.4
(22) Anmeldetag: 14.09.2012
(51) Int. Cl.: F03D 11/02, F03D 11/00, F03D 1/00

(54) **MOBILER DREHANTRIEB FÜR EINEN ROTOR EINER WINDENERGIEANLAGE**
MOBILE ROTARY DRIVE FOR A ROTOR OF A WIND POWER PLANT
ENTRAÎNEMENT ROTATIF MOBILE POUR ROTOR D'ÉOLIENNE

(30) Priorität: 26.09.2011 DE 102011114247
(43) Veröffentlichungstag der Anmeldung: 06.08.2014
(73) Patentinhaber: Senvion GmbH, 22297 Hamburg (DE)
(72) Erfinder: GÖTTSCHE, Christian, 24802 Gross Vollstedt (DE)
(74) Vertreter: Glawe, Delfs, Moll
(86) Internationale Anmeldenummer: PCT/EP2012/068079
(87) Internationale Veröffentlichungsnummer: WO 2013/045290

(56) Entgegenhaltungen:
- EP-A2- 1 167 754
- EP-A2- 2 116 722
- DE-A1-102008 044 900

## Beschreibung

Die Erfindung betrifft einen mobilen Drehantrieb für einen Windrotor einer Windenergieanlage mit einem Rahmen, einem Treibrad zum Antreiben eines Segments einer Rotorwelle der Windenergieanlage und einem Treibsatz, welcher das Treibrad als Triebling drehend antreibt.

Bei der Errichtung und Wartung von Windenergieanlagen ist es für einige Tätigkeiten erforderlich, den Windrotor in bestimmte vorgeschriebene Positionen zu drehen. Beispielsweise ist für einen Servicetechniker der Zugang zur Rotornabe durch eine Zugangsöffnung nur dann möglich, wenn der Rotor in einer bestimmten Position steht, so dass die Zugangsöffnung in Überdeckung steht mit einem Mannloch an der Stirnseite der Gondel. Im Zuge mancher Arbeiten ist auch eine mehrfache Verdrehung des Windrotors erforderlich, bspw. bei einem Ölwechsel. Hierbei muss zum Ablassen des Öls aus einem Stellantrieb eines Rotorblatts jenes in eine bestimmte Position gebracht werden, und dies sukzessive für alle Rotorblätter des Windrotors wiederholt werden. Zur Erleichterung dieser Tätigkeit sind im Stand der Technik verschiedene Ansätze bekannt geworden.

Der erste und älteste besteht darin, die Windenergieanlage händisch zu verdrehen, indem ein Monteur an ein Element der Rotorwelle greift und diese so verdreht. Während dies bei kleinen Windenergieanlagen mit entsprechend kleinem Windrotor durchaus zu praktikablen Ergebnissen führen kann, ist dies für größere moderne Windenergieanlagen zu mühevoll und zu langwierig. Unabhängig davon stellt dies wegen des unmittelbaren Eingreifens an der Rotorwelle eine erhebliche Gefährdung für den Monteur dar.

Größere Windenergieanlagen sind häufig mit einem Getriebe versehen, um die aus aerodynamischen Gründen eher geringe Drehzahl des Windrotors ins Schnelle zu übersetzen zum Antrieb des Generators. An diesem Getriebe kann ein Zusatzflansch vorgesehen sein, an welchem ein Verstellmotor angeordnet ist (EP 2 116 722 A2). Durch Betätigen des Verstellmotors wird dann auf den Zahnradsatz im Getriebe eingewirkt, und damit die Rotorwelle langsam verdreht. Diese Anordnung hat den Nachteil, dass damit das Getriebe zusätzlich belastet wird. Nicht selten macht dies Verstärkungen erforderlich. Zudem bestehen gewisse Bedenken in Bezug auf die Zuverlässigkeit der Getriebe, da unter dem Einfluss des Verstellmotors das Getriebe entgegen seiner Haupt-Lastflussrichtung belastet wird.

Die Problematik des Getriebes wird vermieden bei einem anderen Ansatz, bei welchem der Zahnradsatz für den Stellantrieb aus dem Getriebe heraus verlagert ist (EP 1 167 754 A2). Dazu ist an der Rotorwelle ein gesondertes Zahnrad vorgesehen, in das der Verstellantrieb eingreift. Um die mit einem solchen zusätzlichen Zahnrad hervorgerufenen Anforderungen an Kosten und Bauraum zu begrenzen, ist es bekannt, das Zahnrad als eine besonders gestaltete Bremsscheibe mit einer entsprechend geformten Außenverzahnung auszubilden. Ein Nachteil dieser Lösung ist jedoch, dass die Bremsscheibe an sich ein kostengünstiges Massenprodukt ist und durch die erforderliche Außenverzahnung zu einem teuren Sonderbauteil wird. Außerdem ist eine Nachrüstbarkeit vorhandener Windenergieanlagen nur schwierig möglich.

Der Erfindung liegt die Aufgabe zu Grunde, ausgehend von dem zuletzt genannten Stand der Technik einen Verstellantrieb zu schaffen, der weniger aufwendig ist und auch bei nicht speziell vorgerüsteten Windenergieanlagen verwendbar ist.

Die erfindungsgemäße Lösung liegt in den Merkmalen des unabhängigen Anspruchs und vorzugsweise in denen der abhängigen Ansprüche.

Bei einem mobilen Drehantrieb für einen Windrotor einer Windenergieanlage mit einem Rahmen, einem Treibrad zum Antreiben eines Segments einer Rotorwelle der Windenergieanlage und einem Treibsatz, welcher das Treibrad als Triebling drehend antreibt, ist gemäß der Erfindung vorgesehen, dass das Treibrad ein Reibrad ist und mit einer Andrückeinrichtung derart zusammenwirkt, dass die Andrückeinrichtung eine Anpresskraft des Reibrads auf das Segment derart erzeugt, dass das Reibrad ein Antriebsmoment durch Reibung auf das Segment ausüben kann.

Der Kern der Erfindung liegt in dem Gedanken, einen mobilen Drehantrieb bereitzustellen, der von einer Windenergieanlage zu einer anderen transportiert werden kann und mit dieser lediglich über einen Reibradantrieb auf der Rotorwelle zusammenwirkt, wobei die Windenergieanlage selbst herkömmlich ist. Dank des Reibradantriebs ist eine spezielle Vorrüstung der Windenergieanlage, insbesondere das Bereitstellen eines teuren Sonderbauteils mit freiliegender Außenverzahnung, nicht erforderlich. Der erfindungsgemäße mobile Drehantrieb ist damit universell einsetzbar auch bei nicht speziell vorgerüsteten Windenergieanlagen.

Weiter ist dank der integrierten Andrückeinrichtung eine sichere Betätigung durch den von der Andrückeinrichtung bewirkten Kraftschluss gewährleistet. Auf die körperliche Kraft des Bedieners kommt es daher nicht an. Weiter bietet der Verzicht auf ein Zahnrad an der Rotorwelle den Vorteil, dass keine freilaufende Verzahnung erforderlich ist und damit eine Verringerung der Verletzungsgefahr erreicht wird. Die Erfindung verknüpft somit den Vorteil der klassischen Handbetätigung hinsichtlich universeller Benutzbarkeit und geringen Aufwands mit dem Vorteil der mechanisierten Lösung hinsichtlich leichter Betätigbarkeit.

Unter Rotorwelle wird diejenige Komponente des Antriebsstrangs verstanden, welche die mechanische Leistung vom Windrotor auf den Generator überträgt. Weist die Windenergieanlage ein Getriebe auf, wird als Rotorwelle sowohl ein Bereich des Triebstrangs angesehen, der den Windrotor mit dem Getriebe verbindet, als auch ein Bereich, der das Getriebe mit dem Generator verbindet. Eine Feststellbremse befindet sich üblicherweise auf der Abtriebsseite des Getriebes.

Unter Segment der Rotorwelle wird hierbei der Abschnitt der Rotorwelle verstanden, auf den das Reibrad einwirkt. Es kann sich hierbei um ein Stück des Außenmantels der Rotorwelle handeln. Vorzugsweise handelt es sich jedoch um einen Bereich des Außenumfangs eines Bauelements an der Rotorwelle, welches einen größeren Durchmesser aufweist, bspw. eine Bremsscheibe. Diese bietet den Vorzug, dass sie üblicherweise als Feststellbremse ohnehin vorhanden ist, und andererseits durch den größeren Außenumfang und der damit bewirkten Hebelwirkung geringere Anforderungen an die Höhe der Antriebskraft stellt.

Um auch bei sehr großen und mit schweren Windrotoren versehenen Windenergieanlagen eine leichte Betätigbarkeit zu gewährleisten, ist vorzugsweise der Treibsatz mit einem Antriebsmotor versehen. Unbedingt nötig ist dies aber nicht. Je nach gewähltem Übersetzungsverhältnis im Treibsatz kann auch eine manuelle Betätigung mittels eines Schraubenschlüssels ausreichen.

Zweckmäßigerweise ist der Treibsatz mit einem Anschluss für ein gesondertes Antriebsmittel versehen. Hierbei kann der besagte Schraubenschlüssel verwendet werden, oder gemäß einer bevorzugten Variante ist dort eine Steckkupplung vorgesehen. Zweckmäßigerweise ist die Steckkupplung an einer Achse des Reibrads ausgebildet. Dies ermöglicht einen besonders raumsparenden und kostengünstigen Aufbau des mobilen Drehantriebs. An die Steckkupplung kann ein Motorwerkzeug, wie ein handelsüblicher Akkuschrauber, angesetzt sein. Dies bietet den Vorteil geringen Aufwands, da üblicherweise der Monteur ohnehin einen Akkuschrauber in seiner Ausrüstung mit sich führt. Damit kann der Vorteil einer motorischen Verstellung verknüpft werden mit dem Vorteil eines geringen Gewichts des mobilen Drehantriebs, da dieser keinen eigenen Antriebsmotor benötigt. Der Anschluss des Treibsatzes kann zusätzlich mit einer Sicherheitskupplung ausgestattet sein, die bei plötzlich auftretenden Böen ein Durchschlagen des Antriebsmittels und damit eine Verletzung des Bedieners verhindert.

Die Andrückeinrichtung ist vorzugsweise so ausgebildet, dass sie eine Spannfeder mit einstellbarer Vorspanneinrichtung aufweist. Damit kann eine definierte Vorspannung und damit Anpresskraft des Reibrads auf die Rotorwelle eingestellt sein. Hierbei können unterschiedliche Montagepositionen, die sich bei verschiedenen Windenergieanlagen aufgrund deren jeweiliger konstruktiver Besonderheiten ergeben können, berücksichtigt werden. Mit Vorteil weist die derart einstellbare Vorspanneinrichtung mehrere voreingestellte Spannstufen auf. Dann braucht nur noch die zu der jeweiligen Windenergieanlage gehörende Spannstufe eingestellt zu werden. Die Arbeitsvorbereitung zum Einsatz des mobilen Drehantriebs erleichtert sich damit beträchtlich.

Vorzugsweise sind die Spannfeder und die einstellbare Vorspanneinrichtung in Kompaktbauweise mit einem in einem Becher angeordneten Tellerfederpaket ausgeführt. Weiter vorzugsweise ist eine Spindel sowie ein Sichtfenster vorgesehen, wobei das Sichtfenster Markierungen aufweist, die bei Erreichen der einzustellenden Vorspannung mit dem Tellerfederpaket fluchten. Die Kompaktbauweise ist nicht nur günstig in Bezug auf ihre geringen Raumanforderungen, sondern ermöglicht bei Bedarf auch einen einfachen Austausch. Weiter bietet dies den Vorteil, dass mit den Markierungen am Sichtfenster über die für die verschiedenen Windenergieanlagen vorgesehenen Spannstufen leicht und sicher eingestellt werden können.

Es hat sich bewährt, dass das Reibrad an einer Schwinge angeordnet ist, welche schwenkbar am Rahmen gehaltert ist. Die Schwinge ermöglicht eine günstige Anordnung des Reibrads sowie der Andrückeinrichtung derart, dass einerseits eine sichere Übertragung der von der Andrückeinrichtung erzeugten Anpresskraft gewährleistet ist, andererseits das Reibrad aber auch eventuellen Unrundheiten des Segments der Rotorwelle folgen kann, auf welches das Reibrad einwirkt.

Vorzugsweise weist das Reibrad eine Spurführungsrille auf. Darunter wird verstanden, dass eine Vertiefung am Umfang des Reibrads angeordnet ist, welche zur Aufnahme eines Außenrands des Segments, auf welches das Rad einwirkt, ausgebildet ist. Insbesondere handelt es sich hierbei um eine Rille, die so breit ausgebildet ist, dass der Rand der Bremsscheibe in sie aufnehmbar ist.

Die Schwinge weist vorzugsweise einen Lenker zur Verbindung mit der Andrückeinrichtung auf, wobei der Hebelarm für die Andrückeinrichtung größer ist als derjenige des Reibrads an der Schwinge. Damit wird eine Kraftübersetzung erreicht, so dass das Reibrad mit einer größeren Kraft auf das Segment der Rotorwelle gedrückt wird, als von der Andrückeinrichtung erzeugt wird. Damit kann die Andrückeinrichtung kleiner und kompakter und letztlich auch gewichtsparender ausgeführt werden. Gerade letzteres ist für einen mobilen Drehantrieb von besonderem Vorteil.

Zweckmäßigerweise weist der mobile Drehantrieb eine abnehmbare Drehmomentstütze auf. Diese dient zum Abstützen eines Gegendrehmoments zu dem von dem Reibrad erzeugten Antriebsmoment. Unter abnehmbar wird hierbei verstanden, dass keine dauerhafte (stationäre) Verbindung mit der Windenergieanlage besteht. Vorzugsweise ist die abnehmbare Drehmomentstütze als eine Anlageplatte ausgebildet. Die Anlageplatte dient dazu, sich an ein stationäres Element der Windenergieanlage anzulegen, und darüber das Gegendrehmoment abzustützen. Es kann aber auch vorgesehen sein, dass die abnehmbare Drehmomentstütze als ein Schnellverbinder mit einer stationären Einrichtung der Windenergieanlage ausgeführt ist. Mit dem Schnellverbinder kann eine zügige und gleichzeitig sichere Montage des mobilen Drehantriebs zu Beginn des Einsatzes und, nach dem Abschluss des Einsatzes, wiederum eine entsprechend schnelle Demontage erreicht werden. Besonders bewährt hat es sich, den Schnellverbinder zur Verbindung mit einem Bremssattel einer Scheibenbremseinrichtung der Windenergieanlage auszubilden. So kann bei einer bevorzugten Ausführungsform der Schnellverbinder mit Steckbolzen versehen sein, die in entsprechende Aufnahmen an dem Bremssattel geführt sind. Damit ist der mobile Drehantrieb abgestützt, und gleichzeitig so in Bezug auf die Rotorwelle positioniert, dass das Reibrad in für die Kraftübertragung günstiger Weise auf die Außenfläche der Bremsscheibe einwirkt.

Es ist jedoch nicht zwingend, dass die abnehmbare Drehmomentstütze unmittelbar mit einem Element der Windenergieanlage zusammenwirkt. Es kann auch vorgesehen sein, dass sie als Handgriff ausgeführt ist, wobei dann die Drehmomentabstützung durch den Monteur erfolgt. Dank des erfindungsgemäß vorgesehenen Reibradantriebs sind die hierbei erforderlichen Haltekräfte so gering, dass sie von einer Person aufgebracht werden können. Zudem bietet der Reibradantrieb einen Schutz vor übergroßer Haltekraft und übermäßiger Belastung des Monteurs, da es vorher zu einem Durchrutschen des Reibrads kommt. Damit besteht Eigensicherheit.

Die Drehmomentstütze ist vorzugsweise so ausgebildet, dass sie als Positionierelement wirkt. Damit wird erreicht, dass durch die bestimmungsgemäße Anlage der Drehmomentstütze an einem Element der Windenergieanlage zugleich auch die richtige Ausrichtung des mobilen Drehantriebs auf das Segment der Rotorwelle gewährleistet ist.

Die Erfindung wird nachfolgend unter Bezugnahme auf die beigefügte Zeichnung näher erläutert, in der ein vorteilhaftes Ausführungsbeispiel dargestellt ist. Es zeigen:

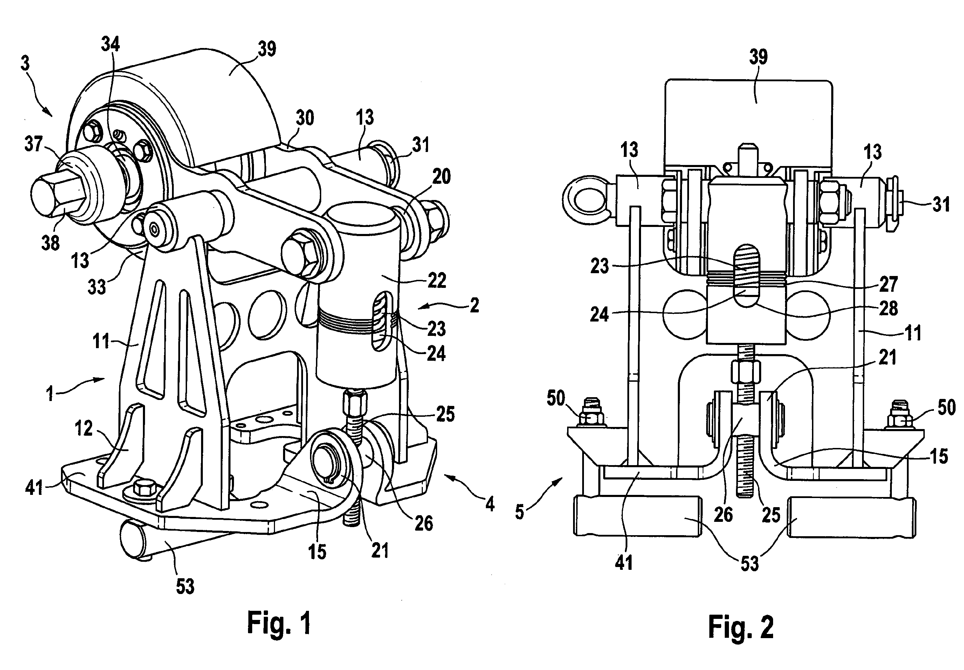

- Fig. 1: eine perspektivische Ansicht eines Ausführungsbeispiels;
- Fig. 2: eine Rückansicht des in Fig. 1 dargestellten Ausführungsbeispiels;
- Fig. 3: eine Ansicht im teilmontierten Zustand;
- Fig. 4: eine Detailansicht einer Andrückeinrichtung;
- Fig. 5: eine Detail von vorne;
- Fig. 6: eine Totalansicht im montierten Zustand an einer Rotorwelle einer Windenergieanlage.

Als Ausführungsbeispiel dargestellt ist ein mobiler Drehantrieb gemäß der Erfindung in Kompaktbauweise. Er umfasst als Hauptkomponenten einen Rahmen 1, eine Andrückeinrichtung 2, einen Treibsatz 3 sowie eine Drehmomentstütze 4.

Der Rahmen 1 ist in Plattenbauweise aufgestellt und umfasst einen Lagerbock 11 für eine Schwinge 30 an seinem oberen Ende und einen Fuß 12 zur Anordnung der Drehmomentstütze 4 an seinem unteren Ende. Der Rahmen ist aus Stahl gefertigt, vorzugsweise dem Material S235 (ehemals St 37-2).

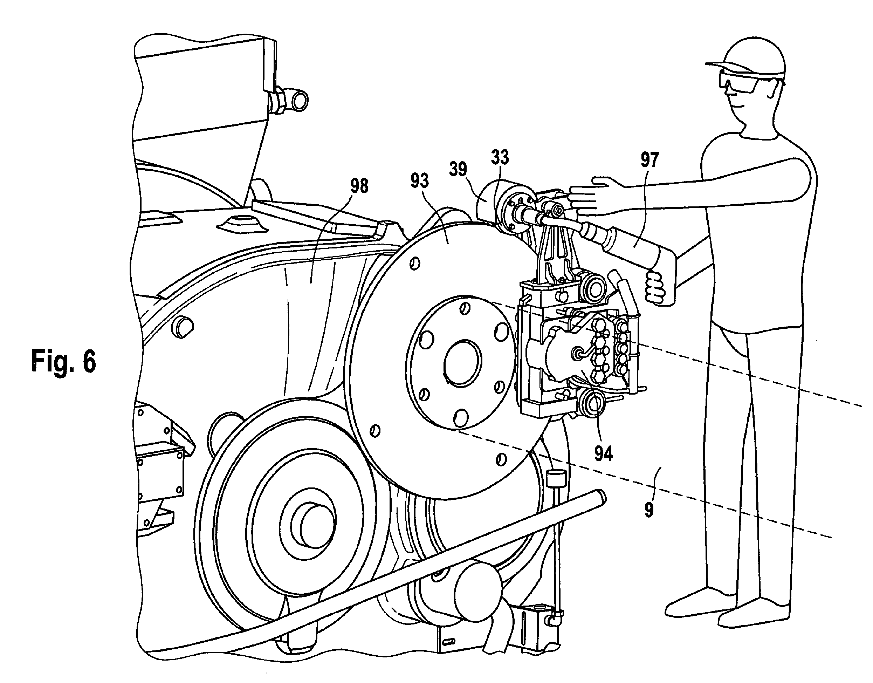

Der mobile Drehantrieb ist zur Anordnung an einer Rotorwelle einer Windenergieanlage vorgesehen. Sie ist teilweise in Fig. 6 gestrichelt dargestellt. Die Rotorwelle überträgt mechanische Leistung vom Windrotor (nicht dargestellt) der Windenergieanlage auf einen Generator (nicht dargestellt) mit einem dazwischen angeordneten Getriebe 98 zur Übersetzung ins Schnelle. Vorliegend geht es um den Bereich der Rotorwelle zwischen Getriebe 98 und Generator; dieser Bereich wird nachfolgend kurz als Rotorwelle 9 bezeichnet. Am getriebeseitigen Ende der Rotorwelle 9 ist mitdrehend eine Bremsscheibe 93 angeordnet, die von einem stationär befestigten Bremssattel 94 umfasst ist. Mittels einer (nicht dargestellten) Hydraulik wird der Bremssattel 94 betätigt, so dass Bremskraft auf die Bremsscheibe 93 und die Rotorwelle 9 ausgeübt wird. Dies ist an sich bekannt und braucht daher nicht weiter erläutert zu werden. Der erfindungsgemäße Drehantrieb ist in dem Ausführungsbeispiel mit seinem Fuß 12 auf dem Bremssattel 94 angeordnet.

An dem Fuß 12 ist die Drehmomentstütze 4 angeordnet. Sie umfasst eine Anlageplatte 41 zum Abstützen auf einer Oberseite des Bremssattels 94 der Rotorwelle 9 einer Windenergieanlage. Sie wirkt zusammen mit Bolzen 53, die miteinander fluchtend an gegenüberliegenden Enden der Anlageplatte 41 angeordnet sind. Sie sind dazu ausgebildet, in entsprechende Aufnahmeöffnungen am Bremssattel 94 formschlüssig einzugreifen und sichern so die Drehmomentstütze in ihrer Position, so dass die Anlageplatte 41 im Betrieb auch unter hoher Drehmomentbelastung stets an der Oberseite des Bremssattels 94 bündig anliegt. Um diese Fixierung und um eine gewünschte Relativposition zwischen dem mobilen Drehantrieb und dem Bremssattel 94 zu erreichen, ist der Fuß 12 mit einer Ausrichteinrichtung 5 versehen. Sie umfasst eine Verstellschraube 50, mit welcher der Abstand der Bolzen 53 verändert werden kann. Im gelockerten Zustand der Verstellschraube 50 sind die Bolzen 53 schwenkbeweglich, so dass der mobile Drehantrieb ausgerichtet werden kann, und im festgezogenen Zustand sind sie festgeklemmt, so dass die ausgerichtete Position fixiert ist. Die Bolzen 53 und die Verstellschrauben 50 fungieren somit als die Ausrichteinrichtung 5. Es sei angemerkt, dass anstelle der Anlageplatte 41 und den Bolzen 53 auch ein Handgriff für die Drehmomentstütze 4 vorgesehen sein kann.

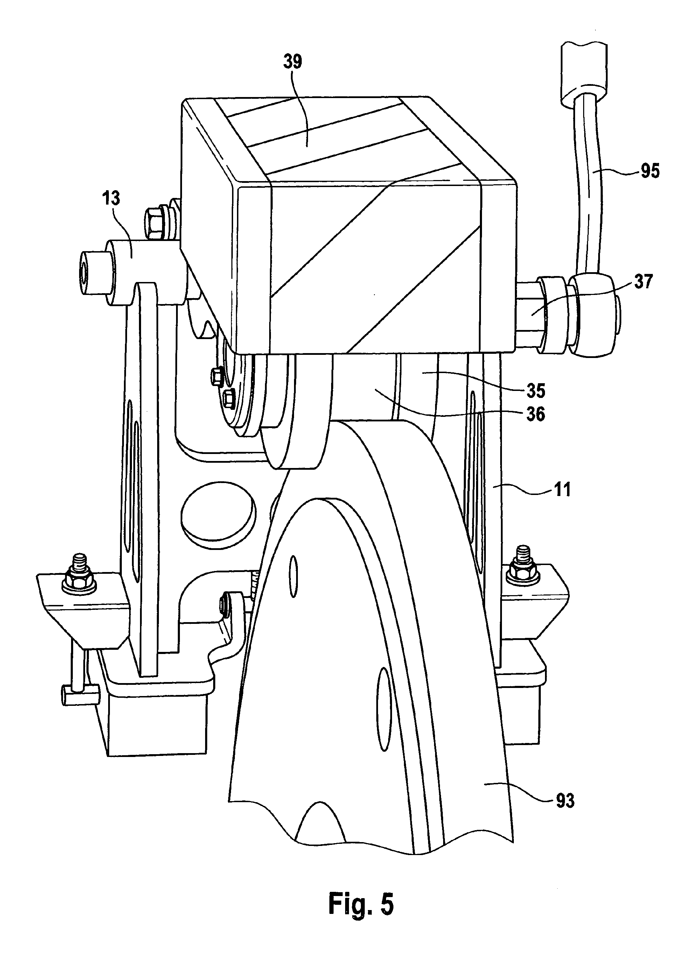

Die Schwinge 30 des Treibsatzes 3 ist über einen Zapfen 31 schwenkbeweglich in Hülsen 13 an dem oberen Ende des Lagerbocks gelagert. An dem vorderen Ende der Schwinge 30 ist ein Reibrad 33 mittels einer Achse 34 drehbar gelagert. Das Reibrad 33 weist an seinem eine Lauffläche bildenden Außenumfang 35 eine Spurrille 36 auf, deren Breite auf die Stärke der Bremsscheibe so abgestimmt ist, dass ihr Rand mit Spiel aufgenommen werden kann. Typisch ist eine Breite der Spurrille 36 von 34 mm bei einer Bremsscheibenstärke von 30 mm. Mit der Spurrille 36 verbessert sich die Führung beim Betrieb des mobilen Drehantriebs. An einem Ende der Achse 34 ist eine Steckkupplung 37 drehfest angeordnet, die an ihrem nach außen weisenden Ende mit einem Sechskant 38 versehen ist. Er fungiert als Steckkupplung zur Ankoppelung eines Verstellwerkzeugs, bspw. eines Verstellschlüssels 95 (s. Fig. 5) oder eines Akkuschraubers 97 (s. Fig. 6).

Das hintere Ende der Schwinge 30 ist als Lenker ausgebildet mit einem oberen Anlenkpunkt 20 für die Andrückeinrichtung 2, deren unterer Anlenkpunkt 21 an einem Ausleger 15 des Rahmens 1 befestigt ist. Die Andrückeinrichtung 2 weist einen nach unten offenen Federbecher 22 auf, in den eine Druckfeder 23 mit einer Druckplatte 24 an ihrem unteren Ende eingesetzt ist. In der Druckplatte ist eine Spindel 25 gelagert, die durch eine Gegenhülse 26 am unteren Anlenkpunkt 21 geführt ist. Durch Verdrehen der Spindel 25 ist die Vorspannung der Druckfeder 23 verstellbar, mit der sie den oberen Anlenkpunkt 20 nach oben und damit das am anderen Ende der Schwinge 30 angeordnete Reibrad 33 nach unten auf den Rand der Bremsscheibe 93 drückt.

Zur Anpassung der Vorspannung an die Anforderungen verschiedener Windenergieanlagen sind an dem Federbecher 22 mehrere (im dargestellten Ausführungsbeispiel drei) Markierungen angebracht. Zur Einstellung wird die Spindel 25 soweit verdreht, bis die in einem Fenster 28 sichtbare Oberkante der Druckplatte 24 mit der gewünschten Markierung fluchtet. Die Markierungen sind als umlaufende Rillen 27 ausgeführt.

Am vorderen Ende der Schwinge 30 ist eine Abdeckung 39 für das Reibrad 33 angeordnet. Damit sind die drehenden Teile vor unbeabsichtigter Berührung geschützt und die Gefahr von Verletzungen ist entsprechend verringert.

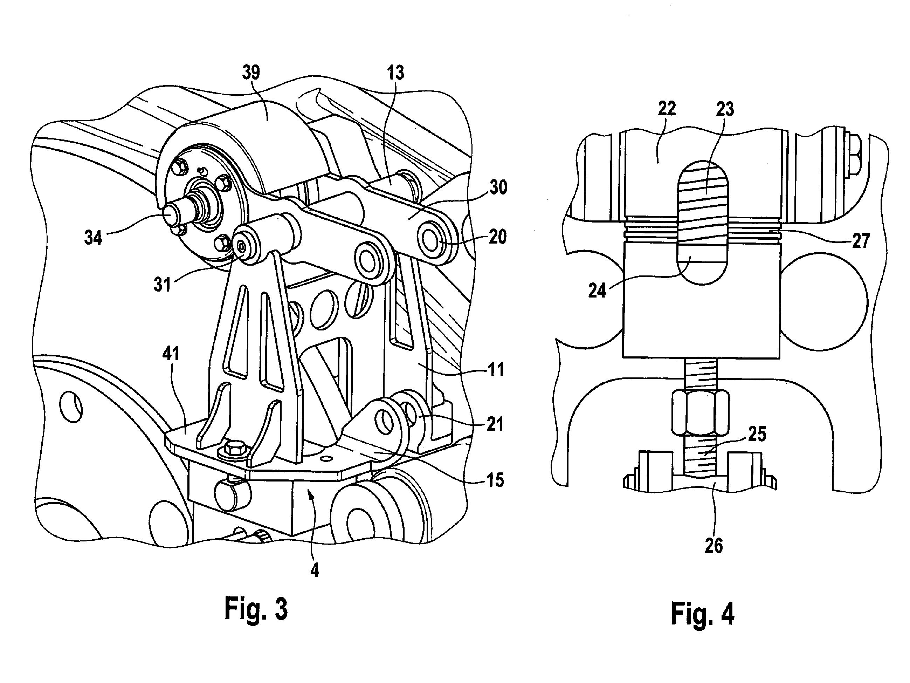

Die Andrückeinrichtung 2 mit den oberen und unteren Anlenkpunkten 20, 21 ist vorzugsweise als auswechselbares Modul ausgeführt (s. Fig. 3). Damit kann bei Bedarf eine andere Andrückeinrichtung eingesetzt werden, um den mobilen Drehantrieb an andere Windenergieanlagen mit anderer Geometrie, insbesondere Abstand zwischen Bremssattel und Rand der Bremsscheibe, und auch an andere geforderte Andrückkräfte, die über den Verstellbereich mittels der Spindel 25 hinausgehen, anzupassen.

Die Anordnung des mobilen Drehantriebs und sein Zusammenwirken mit der Bremsscheibe 93 der Rotorwelle sind in Fig. 5 dargestellt. Im Vordergrund ist die Bremsscheibe 93 dargestellt, auf deren Rand das Reibrad 33 mit seiner Spurrille 36 abläuft. Das Reibrad 33 ist durch die Abdeckung 39 vor Berührung geschützt. Auf die im Bild nach rechts abragende Steckkupplung 37 ist ein Verstellschlüssel 95 zur manuellen Drehung gesteckt.

In Fig. 6 ist eine schematische Darstellung abgebildet, welche die Anordnung des mobilen Drehantriebs auf dem Bremssattel 94 verdeutlicht. Anders als in Fig. 5 ist als Antrieb nunmehr ein Akkuschrauber 97 (mit einem optionalen Winkelgetriebe zum ergonomischeren Halten) auf die Steckkupplung aufgesetzt. Es ist deutlich zu erkennen, dass der mobile Drehantrieb dank seiner kompakten Bauweise und des geringen Gewichts (kein eigener Antriebsmotor erforderlich) gut von einer Person montiert und transportiert werden kann.

## Patentansprüche

1. Mobiler Drehantrieb für einen Windrotor einer Windenergieanlage mit einem Rahmen (1) umfassend ein Treibrad zum Antreiben eines Segments einer Rotorwelle (9) der Windenergieanlage und einem Treibsatz (3), welcher das Treibrad als Triebling drehend antreibt,
**dadurch gekennzeichnet, dass**
das Treibrad ein Reibrad (33) ist und mit einer Andrückeinrichtung (2) derart zusammenwirkt, dass die Andrückeinrichtung (2) eine Anpresskraft des Reibrads (33) auf das Segment erzeugt, so dass das Reibrad (33) ein Antriebsmoment durch Reibung auf das Segment ausüben kann,
wobei weiter eine Drehmomentstütze (4) zum Abstützen eines Gegendrehmoments zu dem von dem Reibrad (33) erzeugten Antriebsmoment vorgesehen ist.

2. Mobiler Drehantrieb nach Anspruch 1,
**dadurch gekennzeichnet, dass**
der Treibsatz (3) einen Antriebsmotor umfasst.

3. Mobiler Drehantrieb nach Anspruch 1,
**dadurch gekennzeichnet, dass**
der Treibsatz (3) ein Anschluss für ein gesondertes Antriebsmittel aufweist.

4. Mobiler Drehantrieb nach Anspruch 3,
**dadurch gekennzeichnet, dass**
der Anschluss als eine Steckkupplung (38) für das gesonderte Antriebsmittel ausgeführt ist.

5. Mobiler Drehantrieb nach Anspruch 4,
**dadurch gekennzeichnet, dass**
das gesonderte Antriebsmittel ein Schraubenschlüssel (95) oder ein Motorwerkzeug, insbesondere ein Akkuschrauber (97), ist.

6. Mobiler Drehantrieb nach einem der vorangehenden Ansprüche,
**dadurch gekennzeichnet, dass**
die Andrückeinrichtung (2) eine Spannfeder (23) mit einstellbarer Vorspanneinrichtung (24, 25) aufweist.

7. Mobiler Drehantrieb nach Anspruch 6,
**dadurch gekennzeichnet, dass**
die einstellbare Vorspanneinrichtung (24, 25) mehrere voreingestellte Spannstufen für verschiedene Windenergieanlagen aufweist.

8. Mobiler Drehantrieb nach einem der vorangehenden Ansprüche,
**dadurch gekennzeichnet, dass**
das Reibrad (33) an einer Schwinge (30) angeordnet ist, die schwenkbar am Rahmen (1) gehaltert ist.

9. Mobiler Drehantrieb nach Anspruch 8,
**dadurch gekennzeichnet, dass**
die Schwinge (30) einen Lenker zur Verbindung mit der Andrückeinrichtung (2) aufweist, dessen Hebelarm größer ist als der des Reibrads (33) an der Schwinge (30).

10. Mobiler Drehantrieb nach einem der vorangehenden Ansprüche,
**dadurch gekennzeichnet, dass**
die Drehmomentstütze (4) als eine Anlageplatte (41) ausgebildet ist.

11. Mobiler Drehantrieb nach einem der vorangehenden Ansprüche,
**dadurch gekennzeichnet, dass**
die Drehmomentstütze als ein Schnellverbinder mit einer stationären Einrichtung, insbesondere einem Bremssattel (94), der Windenergieanlage ausgeführt ist.

12. Mobiler Drehantrieb nach Anspruch 11,
**dadurch gekennzeichnet, dass**
der Schnellverbinder als ein Paar Steckbolzen (53) ausgebildet ist.

13. Mobiler Drehantrieb nach einem der vorangehenden Ansprüche,
**dadurch gekennzeichnet, dass**
die Drehmomentstütze ein Handgriff ist.

## Claims

1. Mobile rotary drive for a wind rotor of a wind power plant having a frame (1) comprising a drive wheel for driving a segment of a rotor shaft (9) of the wind power plant and a drive set (3), which drives the drive wheel in rotation as a drive pinion,
**characterized in that**
the drive wheel is a friction wheel (33) and interacts with a contact pressure device (2) in such a way that the contact pressure device (2) produces a force which presses the friction wheel (33) onto the segment with the result that the friction wheel (33) can apply a drive torque to the segment through friction,
wherein a torque support (4) for supporting a counter-torque to the drive torque produced by the friction wheel (33) is furthermore provided.

2. Mobile rotary drive according to Claim 1, **characterized in that** the drive set (3) comprises a drive motor.

3. Mobile rotary drive according to Claim 1, **characterized in that** the drive set (3) has a connection for a separate drive means.

4. Mobile rotary drive according to Claim 3, **characterized in that** the connection is embodied as a push-fit coupling (38) for the separate drive means.

5. Mobile rotary drive according to Claim 4, **characterized in that** the special drive means is a wrench (95) or a power tool, in particular a cordless screwdriver (97).

6. Mobile rotary drive according to one of the preceding claims, **characterized in that** the contact pressure device (2) has a load spring (23) with an adjustable preloading device (24, 25).

7. Mobile rotary drive according to Claim 6, **characterized in that** the adjustable preloading device (24, 25) has a plurality of preset load levels for various wind power plants.

8. Mobile rotary drive according to one of the preceding claims, **characterized in that** the friction wheel (33) is arranged on a rocker (30), which is held pivotably on the frame (1).

9. Mobile rotary drive according to Claim 8, **characterized in that** the rocker (30) has a link for connection to the contact pressure device (2), the lever arm of which link is greater than that of the friction wheel (33) on the rocker (30).

10. Mobile rotary drive according to one of the preceding claims, **characterized in that** the torque support (4) is designed as a support plate (41).

11. Mobile rotary drive according to one of the preceding claims, **characterized in that** the torque support is embodied as a quick-action connector to a fixed device, in particular a brake caliper (94), of the wind power plant.

12. Mobile rotary drive according to Claim 11, **characterized in that** the quick-action connector is designed as a pair of locking pins (53).

13. Mobile rotary drive according to one of the preceding claims, **characterized in that** the torque support is a handle.

## Revendications

1. Entraînement rotatif mobile pour un rotor d'une éolienne, comportant un cadre (1) entourant une roue d'entraînement destinée à actionner un segment d'un arbre (9) du rotor de l'éolienne et un bloc moteur (3) qui entraîne en rotation la roue d'entraînement sous forme de pignon,
**caractérisé en ce que**
la roue d'entraînement est une roue de friction (33) et coopère avec un dispositif de pression (2), de telle sorte que le dispositif de pression (2) génère une force de pression de la roue de friction (33) sur le segment, de telle sorte que la roue de friction (33) peut exercer un couple d'entraînement par friction sur le segment,
un support de couple (4) étant prévu, en outre, pour supporter un couple de rotation contraire au couple d'entraînement généré par la roue de friction (33).

2. Entraînement rotatif mobile selon la revendication 1, **caractérisé en ce que** le bloc moteur (3) comporte un moteur d'entraînement.

3. Entraînement rotatif mobile selon la revendication 1, **caractérisé en ce que** le bloc moteur (3) comporte un raccordement pour un moyen d'entraînement séparé.

4. Entraînement rotatif mobile selon la revendication 3, **caractérisé en ce que** le raccordement est réalisé sous la forme d'un système d'accouplement enfichable (38) pour le moyen d'entraînement séparé.

5. Entraînement rotatif mobile selon la revendication 4, **caractérisé en ce que** le moyen d'entraînement séparé est une clé de serrage (95) ou un outil moteur, en particulier un tournevis électrique rechargeable (97).

6. Entraînement rotatif mobile selon l'une quelconque des revendications précédentes, **caractérisé en ce que** le dispositif de pression (2) comporte un ressort de tension (23) avec un dispositif de précontrainte (24, 25) réglable.

7. Entraînement rotatif mobile selon la revendication 6, **caractérisé en ce que** le dispositif de précontrainte (24, 25) réglable comporte plusieurs niveaux de tension préréglés pour différentes éoliennes.

8. Entraînement rotatif mobile selon l'une quelconque des revendications précédentes, **caractérisé en ce que** la roue de friction (33) est disposée sur un système oscillant (30) qui est maintenu sur le cadre (1) de manière à pouvoir pivoter.

9. Entraînement rotatif mobile selon la revendication 8, **caractérisé en ce que** le système oscillant (30) comporte une bielle pour la liaison avec le dispositif de pression (2), dont le bras de levier est supérieur à celui de la roue de friction (33) sur le système oscillant (30).

10. Entraînement rotatif mobile selon l'une quelconque des revendications précédentes, **caractérisé en ce que** le support de couple (4) est réalisé sous la forme d'un plateau d'appui (41).

11. Entraînement rotatif mobile selon l'une quelconque des revendications précédentes, **caractérisé en ce que** le support de couple est réalisé sous la forme d'un dispositif d'accouplement rapide à un dispositif stationnaire, en particulier un étrier de frein (94), de l'éolienne.

12. Entraînement rotatif mobile selon la revendication 11, **caractérisé en ce que** le dispositif d'accouplement rapide est réalisé sous la forme d'une paire d'axes embrochables (53).

13. Entraînement rotatif mobile selon l'une quelconque des revendications précédentes, **caractérisé en ce que** le support de couple est une poignée.
